# EUROPEAN PATENT APPLICATION

(11) **EP 2 816 011 A1**
(43) Date of publication of application: **24.12.2014**
(21) Application number: 13748918.3
(22) Date of filing: 08.02.2013
(51) Int. Cl.: C01F 5/22, C08K 3/22, C08K 9/04, C08L 23/00, C08L 101/00, H01B 3/44, H01B 7/295, H01B 3/00

(54) **MAGNESIUM HYDROXIDE MICROPARTICLES**

(30) Priority: 13.02.2012 JP 2012028480; 23.03.2012 JP 2012066828
(71) Applicant: Kyowa Chemical Industry Co., Ltd, Takamatsu-shi, Kagawa 761-0113 (JP)
(72) Inventor: NAKAMURA, Tsukasa, Sakaide-shi Kagawa 762-0012 (JP); KUROGI, Yusuke, Sakaide-shi Kagawa 762-0012 (JP)
(74) Representative: Raynor, Stuart Andrew
(86) International application number: PCT/JP2013/053776
(87) International publication number: WO 2013/122239

(57) **Abstract**

Magnesium hydroxide fine particles having a nano-order particle size, a low carbon content, high whiteness and high transparency and a production process therefor.

The magnesium hydroxide fine particles have an average secondary particle diameter measured by frequency analysis of 1 to 100 nm and a carbon content of less than 0.9 wt%.

## Description

### TECHNICAL FIELD

The present invention relates to magnesium hydroxide fine particles and a production process therefor. Further, it relates to a resin composition comprising the particles and a molded article formed therefrom.

### BACKGROUND ART

Magnesium hydroxide particles have been known for a long time and used for medical and industrial purposes in a wide variety of fields. For example, for medical purposes, they are used in antacids, purgantias and medical agents for animals, and for industrial purposes, they are used in flame retardants which are mixed with a thermoplastic resin to provide flame retardancy to the thermoplastic resin, adsorbents for oil-containing wastewater, flue-gas desulfurization agents, wastewater neutralizing agents and soil improving agents.

Technology for improving a flame retarding effect by reducing the sizes of magnesium hydroxide particles as a flame retardant and improving the dispersibility of the particles is now desired. This is because finer particles having higher dispersibility increase flame retarding efficiency, thereby making it possible to obtain high flame retardancy with a small amount thereof. Since electronic equipment is becoming smaller in size and thinner, a particulate flame retardant which can be used in such electronic equipment is needed. Magnesium hydroxide fine particles having an average particle diameter of 10 to 1,000 nm are proposed as particulate magnesium hydroxide which is a particulate flame retardant (patent document 1). However, the magnesium hydroxide fine particles contain not less than 0.9 wt% of carbon and are therefore unsuitable for use in a blending system in which an organic treatment is not required or application fields in which magnesium hydroxide purity is required (such as an additive to ceramics such as glass or a raw material as a magnesium source) though they may be advantageous when they are mixed with a resin composition.

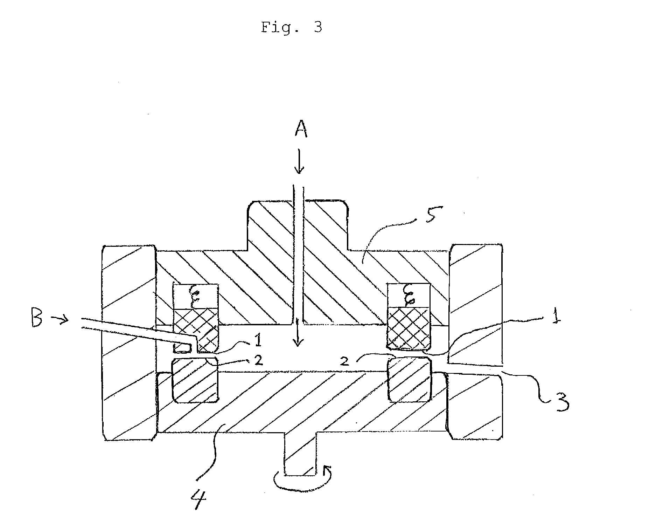

Although it is known that a micro-reactor is used to produce nano-particles, the micro-reactor is defined as a small-scale chemical reactor having a reactive site with one side width smaller than 1 mm or 500 µm and excellent in the controllability of detailed conditions such as energy efficiency, reaction rate, yield, safety, temperature control, high-speed uniform mixing, the improvement of concentration uniformity and scale-up as compared with other apparatuses for carrying out a larger-scale reaction. A small Y-shaped tube micro-reactor is famous, and it is known that this micro-reactor can be used to synthesize nano-particles. However, since the reactive site is a very small space, the crystallization reaction of magnesium hydroxide particles causes the clogging of the pipe, whereby magnesium hydroxide fine particles can be synthesized only in very low concentration. Therefore, the micro-reactor is not suitable for the crystallization reaction of an inorganic compound. In a forced thin-film type micro-reactor as shown in patent document 2, although the reactive site is a very small space having a size of 1 to 30 µm, a lower disk shown in the apparatus diagram of Fig. 3 turns to discharge the formed nano-particles to the outside of the apparatus by centrifugal force, thereby making it possible to easily synthesize inorganic compound nano-particles in high concentration without blocking up the inside of the apparatus.
(Patent Document 1) JP-A 2009-62214
(Patent Document 2) JP-A 2009-131831

### DISCLOSURE OF THE INVENTION

It is an object of the present invention to provide magnesium hydroxide fine particles having a nano-order particle size, low carbon content, high whiteness and high transparency and a production process therefor.

The inventors of the present invention conducted studies on a process for obtaining magnesium hydroxide fine particles having a nano-order particle size. As a result, they found that when a magnesium salt aqueous solution and an alkali substance raw material are reacted in a forced thin-film type micro-reactor, magnesium hydroxide fine particles having a nano-order particle size are obtained and that the obtained particles have excellent purity with an extremely low carbon content and high whiteness. The present invention was accomplished based on this finding.

That is, the present invention is magnesium hydroxide fine particles having an average secondary particle diameter measured by frequency analysis of 1 to 100 nm and a carbon content of less than 0.9 wt%. The present invention is also a resin composition comprising 100 parts by weight of a synthetic resin and 1 to 95 parts by weight of magnesium hydroxide fine particles having an average particle diameter measured by frequency analysis of 1 to 100 nm and a carbon content of less than 0.9 wt%. The present invention is further a molded article formed from the above resin composition. The present invention is still further a process for producing the above magnesium hydroxide particles, comprising reacting a magnesium salt aqueous solution with an alkali substance raw material in a forced thin-film type micro-reactor having a reactive site clearance of 1 to 30 µm.

### BRIEF DESCRIPTION OF THE DRAWINGS

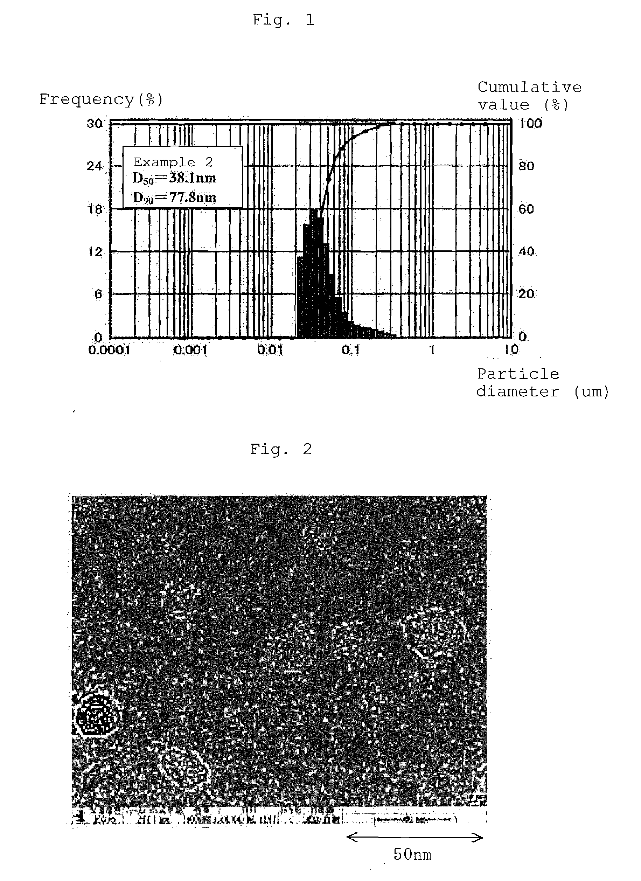

Fig. 1 shows the particle size distribution of magnesium hydroxide particles obtained in Example 2;
Fig. 2 shows a TEM image of magnesium hydroxide particles obtained in Example 2; and
Fig. 3 shows an example of a forced thin-film type micro-reactor.

### BEST MODE FOR CARRYING OUT THE INVENTION

### <magnesium hydroxide fine particles>

The average secondary particle diameter of the magnesium hydroxide fine particles of the present invention is 1 to 100 nm, preferably 10 to 90 nm, more preferably 15 to 90 nm. The average secondary particle diameter of the particles is measured by frequency analysis.

The carbon content of the magnesium hydroxide fine particles of the present invention is less than 0.9 wt%, preferably less than 0.8 wt%, more preferably less than 0.7 wt%.

The magnesium hydroxide fine particles of the present invention may be surface treated with a surface treating agent. The surface treating agent is preferably at least one selected from the group consisting of higher fatty acids, titanate coupling agents, silane coupling agents, aluminate coupling agents, phosphoric acid esters of a polyhydric alcohol and anionic surfactants.

The higher fatty acids include fatty acids having 10 or more carbon atoms such as stearic acid, oleic acid, erucic acid and palmitic acid, and alkali metal salts thereof.

The titanate coupling agents include isopropyl triisostearoyl titanate, isopropyl tris(dioctylpyrophosphate)titanate, isopropyl tri(N-aminoethyl-aminoethyl)titanate and isopropyl tridecylbenzenesulfonyl titanate.

The silane coupling agents include vinyl ethoxysilane, vinyl-tris(2-methoxy)silane, gamma-methacryloxypropyltrimethoxysilane, gamma-aminopropyltrimethoxysilane, beta(3,4-epoxycyclohexyl)ethyltrimethoxysilane, gamma-glycidoxy-propyltrimethoxysilane and gamma-mercaptopropyltrimethoxysilane.

The aluminate coupling agents include acetoalkoxyaluminum diisopropylate.

The phosphoric acid esters of a polyhydric alcohol include mono- and di-esters of stearyl alcohol and orthophosphoric acid, and mixtures thereof.

The anionic surfactants include amide-linked aliphatic carboxylic acid salts, amide-linked sulfuric acid ester salts, amide-linked sulfonic acid salts, amide-linked alkyl allyl sulfonic acid salts, sulfuric acid ester salts of a higher alcohol such as stearyl alcohol, sulfuric acid ester salts of polyethylene glycol ether, ester-linked sulfuric acid ester salts, ester-linked sulfonic acid salts, ester-linked alkyl allyl sulfonic acid salts and ether-linked alkyl allyl sulfonic acid salts.

To coat the surfaces of the magnesium hydroxide fine particles of the present invention with the surface treating agent, a wet process known per se may be employed. For example, in the wet process, the surface treating agent in a liquid or emulsion form is added to magnesium hydroxide fine particle slurry and stirred fully mechanically at a temperature of up to about 100°C. In a dry process, the surface treating agent in a liquid, emulsion or solid form is added to magnesium hydroxide powders while they are fully stirred by means of a mixer such as a Henschel mixer to be fully mixed with the magnesium hydroxide powders under heating or non-heating. The amount of the surface treating agent to be added may be suitably selected.

### <resin composition>

The resin composition of the present invention comprises 100 parts by weight of a synthetic resin and 1 to 95 parts by weight of magnesium hydroxide fine particles having an average particle diameter measured by frequency analysis of 1 to 100 nm and a carbon content of less than 0.9 wt%.

The content of the magnesium hydroxide fine particles is preferably 5 to 90 parts by weight, more preferably 10 to 85 parts by weight, much more preferably 15 to 85 parts by weight based on 100 parts by weight of the synthetic resin.

Any synthetic resin is acceptable if it is generally used as a molded article, and examples thereof include thermoplastic resins such as olefin (α-olefin) polymers and copolymers having 2 to 8 carbon atoms including polyethylene, polypropylene, ethylene/propylene copolymer, polybutene and poly· 4-methylpentene-1, copolymers of these olefins and dienes, ethylene-acrylate copolymers, polystyrene, ABS resin, AAS resin, AS resin, MBS resin, ethylene/vinyl chloride copolymer resin, ethylene vinyl acetate copolymer resin, ethylene-vinyl chloride-vinyl acetate graft polymer resin, vinylidene chloride, polyvinyl chloride, chlorinated polyethylene, chlorinated polypropylene, vinyl chloride propylene copolymer, vinyl acetate resin, phenoxy resin, polyacetal, polyamide, polyimide, polycarbonate, polysulfone, polyphenylene oxide, polyphenylene sulfide, polyethylene terephthalate, polybutylene terephthalate and methacrylic resin.

Out of these thermoplastic resins, preferred are polyolefins and copolymers thereof which are excellent in flame retarding effect by magnesium hydroxide particles, thermal deterioration prevention effect and mechanical strength retention characteristics. Specific examples thereof include polypropylene-based resins such as polypropylene homopolymer and ethylene propylene copolymer, polyethylene-based resins such as high-density polyethylene, low-density polyethylene, linear low-density polyethylene, ultralow-density polyethylene, EVA (ethylene vinyl acetate resin), EEA (ethylene ethyl acrylate resin), EMA (ethylene methyl acrylate copolymer resin), EAA (ethylene acrylic acid copolymer resin) and super high-molecular weight polyethylene, and olefin (α-ethylene) polymers and copolymers having 2 to 6 carbon atoms such as polybutene and poly4-methylpentene-1.

Further, thermosetting resins such as epoxy resin, phenolic resin, melamine resin, unsaturated polyester resin, alkyd resin and urea resin, and synthetic rubbers such as EPDM, butyl rubber, isoprene rubber, SBR, NBR, chlorosulfonated polyethylene, NIR, urethane rubber, butadiene rubber, acrylic rubber, silicone rubber and fluorine rubber may also be used. The synthetic resin is preferably a polyolefin or a copolymer thereof.

The resin composition of the present invention is substantially composed of the above synthetic resin and magnesium hydroxide fine particles but may further comprise a flame retarding aid. By blending this flame retarding aid, the content of the magnesium hydroxide fine particles can be reduced and the flame retarding effect can be enhanced.

The flame retarding aid is preferably red phosphorus, carbon powder or a mixture thereof. As red phosphorus may be used ordinary red-phosphorus for flame retardants, or red phosphorus whose surface has been coated with a thermosetting resin, polyolefin, carboxylic acid polymer, titanium oxide or titanium aluminum condensate. The carbon powder is carbon black, activated carbon or graphite and may be prepared by an oil furnace method, gas furnace method, channel method, thermal method or acetylene method.

The content of the flame retarding aid is preferably 0.1 to 20 parts by weight, more preferably 0.5 to 15 parts by weight based on 100 parts by weight of the synthetic resin.

The resin composition of the present invention may comprise other additives. The additives include an antioxidant, antistatic agent, pigment, foaming agent, plasticizer, filler, reinforcing material, organic halogen flame retardant, crosslinking agent, optical stabilizer, ultraviolet absorbent and lubricant.

### <molded article>

The present invention includes a molded article formed from the above resin composition. Examples of the molded article include electric and electronic equipment parts such as electric wires, cables, radiation sheets, printed wiring boards and semiconductor sealants, home electrical appliance parts, car parts, glass products and ceramic products.

### <process for producing magnesium hydroxide fine particles>

The magnesium hydroxide fine particles of the present invention can be produced by reacting a magnesium salt aqueous solution with an alkali substance raw material in a forced thin-film type micro-reactor having a reactive site clearance of 1 to 30 µm.

For the production of the magnesium hydroxide fine particles of the present invention, the ULREA SS-11 micro-reactor of M Technique Co., Ltd. may be used. This apparatus is a forced thin-film type micro-reactor having a reactive site clearance of 1 to 30 µm and a mechanism for discharging magnesium hydroxide slurry crystallized by the rotation of a disk. This is a continuous reactor in which magnesium hydroxide slurry is discharged to the outside of the apparatus right after a crystallization reaction in the disk. Therefore, even when the reactive site clearance is 1 to 30 µm, a reaction can be carried out in high concentration without the occlusion of the reactor by the formed crystallized substance, thereby making it possible to obtain nano-particles.

An example of the forced thin-film type micro-reactor used in the present invention is shown in Fig. 3. The forced thin-film type micro-reactor has a reactive site formed by a first processing surface (1) and a second processing surface (1) both of which are opposed to each other, turn relative to each other and can approach or part from each other relatively. This micro-reactor produces force in a direction that the two processing surfaces part from each other by the supply pressure of the raw materials and force for moving the two processing surfaces in a direction that they approach each other so that the reactive site is kept in a very small space. One of the first processing surface (1) and the second processing surface (2) may turn and the other may remain still, or both of them may turn in opposite directions.

The magnesium salt aqueous solution (A) as a raw material is supplied into the reactive site from the center part of the reactor with a predetermined pressure. The alkali substance (B) as a raw material is supplied into the reactive site from a supply port different from that of the magnesium salt aqueous solution (A). The slurry containing particulate magnesium hydroxide produced by the reaction is discharged from a discharge port (3). When the forced thin-film type micro-reactor is used, a reaction can be carried out in the state of a thin film fluid.

In Fig. 3, a rotary disk (4) turns and a fixed disk (5) does not turn. The revolution of the rotary disk (4) is preferably 300 to 3, 550 rpm, more preferably 500 to 3,000 rpm.

The gap between the first processing surface (1) and the second processing surface (2), that is, the reactive site clearance is 1 to 30 µm, preferably 3 to 20 µm, more preferably 5 to 15 µm.

The first processing surface (1) is like a hollow disk and fixed to the fixed disk (4). The second processing surface (2) is like a hollow disk and fixed to the rotary disk (4).

The flow rate in the reactive site of the magnesium salt aqueous solution (A) is preferably 10 to 250 ml/sec, more preferably 15 to 200 ml/sec. The flow rate in the reactive site of the alkali substance (B) is preferably 10 to 250 ml/sec, more preferably 15 to 200 ml/sec.

An aqueous solution of magnesium chloride, magnesium nitrate or magnesium sulfate is used as the magnesium salt aqueous solution raw material. An aqueous solution of caustic soda, ammonia or potassium hydroxide is used as the alkali substance raw material.

The reaction temperature is preferably 5 to 90 °C, more preferably 5 to 60°C, much more preferably 5 to 50°C.

As for the reaction ratio of magnesium and alkali, the amount of the hydroxide (OH) is 0.2 to 12 moles, more preferably 0.4 to 10 moles, much more preferably 0.6 to 8 moles based on 1 mole of magnesium.

Since raw materials containing no carbon are used in the process for producing magnesium hydroxide fine particles of the present invention as described above, magnesium hydroxide fine particles which are a final product do not contain carbon. If an organic treatment is necessary, an organic surface treatment with a fatty acid which is prior art may be carried out.

### EXAMPLES

The following examples and comparative examples are provided for the purpose of further illustrating the present invention but are in no way to be taken as limiting.

As for (a) particle size distribution and average secondary particle diameter, (b) TEM observation diameter, (c) carbon content and (d) X-ray structural analysis of magnesium hydroxide particles in Examples and as for (e) coating film thickness and (f) haze in Examples of the resin composition, measurement values obtained by the following measurement methods are given.
(a) Particle size distribution and average secondary particle diameter:
   These were measured by using the UPA-UT151 particle size distribution apparatus (dynamic light scattering method, frequency analysis) of Nikkiso Co. , Ltd. and the Micro-track MT3300EX II (laser diffraction method) of Nikkiso Co., Ltd. Ion exchange water was used as a solvent at the time of measurement, and magnesium hydroxide slurry was measured after 5 minutes of an ultrasonic treatment. Measurement was made a total of two times, and %50 obtained by these measurements is taken as the average secondary particle diameter of a specimen.
(b) TEM observation diameter:
   The JEM-2100 of JEOL Ltd. was used. A specimen was prepared by dropping magnesium hydroxide slurry on a collodion film after 5 minutes of an ultrasonic treatment and observed.
(c) Carbon content
   This was measured by using the TOC-5000 wholly organic carbon meter of Shimadzu Corporation.
(d) X-ray structural analysis:
   The RINT2200V of Rigaku Corporation was used.
(e) Coating film thickness
   This was measured by using the SDA-25 specimen thickness meter of Kobunshi Keiki Co., Ltd.
(f) Haze measurement
   Total light transmittance and cloudiness were measured by using the AUTOMATIC HAZEMETER OPTICAL UNIT TC-HIIIDP of Tokyo Denshoku Co., Ltd.

### Example 1

The ULREA SS-11 forced thin-film type micro-reactor of M Technique Co., Ltd. was used as a reactor. As raw materials, a magnesium chloride aqueous solution having a concentration of 1.409 mol/L was supplied at a flow rate of 30 ml/min and 6.045 N caustic soda was supplied at a flow rate of 13.3 ml/min to carry out a reaction at a temperature of 35°C, a reactive site clearance of about 10 µm and a rotary disk revolution of 1,700 rpm so as to obtain magnesium hydroxide slurry.

The obtained slurry was separated by filtration by means of a centrifugal separator and washed with ion exchange water. When solid matter obtained after washing was emulsified with ion exchange water, ultrasonically treated for 5 minutes and then measured by means of the UPA-UT151 particle size distribution apparatus (dynamic light scattering method, frequency analysis) of Nikkiso Co. , Ltd., magnesium hydroxide fine particles having an average secondary particle diameter of 15.8 nm were obtained. When X-ray analysis was made on the particles, they were magnesium hydroxide.

### Example 2

By using ULREA SS-11 as in Example 1, a magnesium chloride aqueous solution having a concentration of 0.764 mol/L was supplied at a flow rate of 10 ml/min and 0.264N caustic soda was supplied at a flow rate of 250 ml/min as raw materials to carry out a reaction at a temperature of 20°C, a reactive site clearance of about 10 µm and a rotary disk revolution of 1,700 rpm so as to obtain magnesium hydroxide slurry.

The obtained slurry was separated by filtration by means of a centrifugal separator and washed with ion exchange water. When solid matter obtained after washing was emulsified with ion exchange water, ultrasonically treated for 5 minutes and then measured by means of the UPA-UT151 particle size distribution apparatus (dynamic light scattering method, frequency analysis) of Nikkiso Co., Ltd., magnesium hydroxide fine particles having an average secondary particle diameter of 38.1 nm were obtained. When X-ray analysis was made on the particles, they were magnesium hydroxide. Dispersed particles having a diameter of not more than 50 nm could be observed through a transmission electron microscope (TEM).

### Example 3

By using ULREA SS-11 as in Example 1, a magnesium chloride aqueous solution having a concentration of 0.764 mol/L was supplied at a flow rate of 10 ml/min and 0.264N caustic soda was supplied at a flow rate of 250 ml/min as raw materials to carry out a reaction at a temperature of 77 °C, a reactive site clearance of about 10 µm and a rotary disk revolution of 1,700 rpm so as to obtain magnesium hydroxide slurry.

The obtained slurry was separated by filtration by means of a centrifugal separator and washed with ion exchange water. When solid matter obtained after washing was emulsified with ion exchange water, ultrasonically treated for 5 minutes and then measured by means of the UPA-UT151 particle size distribution apparatus (dynamic light scattering method, frequency analysis) of Nikkiso Co., Ltd., magnesium hydroxide fine particles having an average secondary particle diameter of 60.1 nm were obtained. When X-ray analysis was made on the particles, they were magnesium hydroxide.

### Example 4

By using ULREA SS-11 as in Example 1, a magnesium chloride aqueous solution having a concentration of 0.7045 mol/L was supplied at a flow rate of 100 ml/min and 3.023 N caustic soda was supplied at a flow rate of 44.3 ml/min as raw materials to carry out a reaction at a temperature of 35 °C, a reactive site clearance of about 10 µm and a rotary disk revolution of 1,700 rpm so as to obtain magnesium hydroxide slurry.

The obtained slurry was separated by filtration by means of a centrifugal separator and washed with ion exchange water. When solid matter obtained after washing was emulsified with ion exchange water, ultrasonically treated for 5 minutes and then measured by means of the UPA-UT151 particle size distribution apparatus (dynamic light scattering method, frequency analysis) of Nikkiso Co., Ltd., magnesium hydroxide fine particles having an average secondary particle diameter of 69.4 nm were obtained.

### Example 5

By using ULREA SS-11, a magnesium chloride aqueous solution having a concentration of 1.409 mol/L was supplied at a flow rate of 100 ml/min and 6.045N caustic soda was supplied at a flow rate of 44.3 ml/min as raw materials to carry out a reaction at a temperature of 35°C, a reactive site clearance of about 10 µm and a rotary disk revolution of 1,700 rpm so as to obtain magnesium hydroxide slurry.

The obtained slurry was separated by filtration by means of a centrifugal separator and washed with ion exchange water. When solid matter obtained after washing was emulsified with ion exchange water, ultrasonically treated for 5 minutes and then measured by means of the UPA-UT151 particle size distribution apparatus (dynamic light scattering method, frequency analysis) of Nikkiso Co. , Ltd., magnesium hydroxide fine particles having an average secondary particle diameter of 89.4 nm were obtained. When X-ray analysis was made on the particles, they were magnesium hydroxide.

### Comparative Example 1

44.3 ml of 6.045 N caustic soda was injected into 100 ml of a magnesium chloride aqueous solution having a concentration of 1.409 mol/L under agitation at 35°C over 5 minutes to carry out a batch reaction in a stainless steel reactor so as to obtain magnesium hydroxide slurry.

The obtained slurry was separated by filtration by means of a centrifugal separator and washed with ion exchange water. When solid matter obtained after washing was emulsified with ion exchange water and then measured for its particle size by means of the Micro-track MT3300EX II of Nikkiso Co., Ltd. in accordance with a laser diffraction scattering method, the average secondary particle diameter was 1,280 nm.

**Table 1**

| | Average secondary particle diameter (nm) | Carbon content (%) | TEM observation diameter (nm) |
|---|---|---|---|
| Example 1 | 15.8 | No detect | - |
| Example 2 | 38.1 | No detect | 20-50 |
| Example 3 | 60.1 | No detect | - |
| Example 4 | 69.4 | No detect | - |
| Example 5 | 89.4 | No detect | - |
| Comparative Example 1 | 1280 | No detect | - |

### Example 6

### (blending example of resin)

Resin component, 100phr
Magnesium hydroxide nano-particles of Example 4, 20phr

### (preparation of resin composition)

5.395 g (acrylic resin content of 2.460 g) of the water-soluble gloss varnish of Kanpe Hapio Co., Ltd. (components: synthetic resin (acryl), organic solvent, water) was mixed with 10 ml of the magnesium hydroxide particle slurry of Example 4 prepared to a concentration of 49.2 g/L to disperse the slurry ultrasonically for 1 minute so as to obtain inorganic organic composite slurry. 1 ml of this inorganic organic composite slurry was cast over a PET plate having a thickness of 125 µm and naturally dried for one night to obtain an inorganic organic composite coating film. The thickness of the coating film was 80 to 160 µm.

### Comparative Example 2

A resin composition was prepared under the same conditions as in Example 6 by using magnesium hydroxide particle slurry having an average secondary particle diameter of 0.8 µm (49.2 g/L). The thickness of the coating film was 70 to 130 µm.

### Example 7

The hazes of the coating films of Example 6 and Comparative Example 2 were measured.

**Table 2**

| | Example 6 | Comparative Example 2 |
|---|---|---|
| Total light transmittance (%) | 84.4 | 81.2 |
| Cloudiness (haze) (%) | 15.0 | 59.7 |

### Effect of the Invention

The magnesium hydroxide fine particles of the present invention have an average secondary particle diameter (measured by the frequency analyzing method) of 1 to 100 nm, preferably 10 to 90 nm, do not contain carbon and have high purity. Since the magnesium hydroxide fine particles of the present invention have an extremely small average secondary particle diameter, they can be expected to be used in fields in which submicron-order particles cannot be used, such as small-sized electronic equipment and thin films. Since they have a very small particle size, they have high transparency and therefore it is conceivable to use the particles in fields in which transparency is required.

Since the magnesium hydroxide fine particles of the present invention have an extremely small average secondary particle diameter of not more than 100 nm and high whiteness (high transparency), a molded article having a higher flame retarding effect and higher transparency than those of conventional magnesium hydroxide having an average secondary particle diameter of more than 100 nm can be obtained.

According to the production process of the present invention, magnesium hydroxide fine particles can be produced by carrying out a reaction in a forced thin-film type micro-reactor by using a magnesium salt aqueous solution and an alkali substance raw material. Magnesium hydroxide obtained by milling contains a contaminant through contact with a milling medium, and magnesium hydroxide obtained by adding an additive containing an organic substance has a possibility that the additive may function as an impurity. However, since the magnesium hydroxide fine particles of the present invention are synthesized by a reaction using the conventional magnesium hydroxide raw material, they do not contain a contaminant and nano-particles are obtained without adding an additive. While magnesium hydroxide particles produced through a reaction using a conventional reactor have poor dispersibility and become agglomerated particles, magnesium hydroxide fine particles having high dispersibility are obtained by the production process of the present invention. Therefore, even when they are mixed with a resin, they exhibit high transparency.

### Industrial Applicability

The magnesium hydroxide fine particles of the present invention can be used as a flame retardant, heat conducting agent, acid acceptor, adsorbent, thickener or reinforcing agent.

### Explanations of Letters in Numerals

- 1: first processing surface
- 2: second processing surface
- 3: discharge port
- 4: rotary disk
- 5: fixed disk
- A: magnesium salt aqueous solution
- B: alkali substance

## Claims

1. Magnesium hydroxide fine particles having an average secondary particle diameter measured by frequency analysis of 1 to 100 nm and a carbon content of less than 0.9 wt%.

2. The magnesium hydroxide fine particles according to claim 1 which are surface treated with at least one surface treating agent selected from the group consisting of higher fatty acids, titanate coupling agents, silane coupling agents, aluminate coupling agents, phosphoric acid esters of a polyhydric alcohol and fatty acid, and anionic surfactants.

3. A resin composition comprising 100 parts by weight of a synthetic resin and 1 to 95 parts by weight of magnesium hydroxide fine particles having an average particle diameter measured by frequency analysis of 1 to 100 nm and a carbon content of less than 0.9 wt%.

4. The resin composition according to claim 3, wherein the synthetic resin is a polyolefin or a copolymer thereof.

5. A molded article formed from the resin composition of claim 3.

6. The molded article according to claim 5 which is an electric wire or a cable.

7. A process for producing the magnesium hydroxide fine particles of claim 1, comprising reacting a magnesium salt aqueous solution with an alkali substance raw material in a forced thin-film type micro-reactor having a reactive site clearance of 1 to 30 µm.

8. The production process according to claim 7, wherein the forced thin-film type micro-reactor has a reactive site formed by a first processing surface (1) and a second processing surface (1) which are opposed to each other, turn relative to each other, can approach or part from each other relatively, and produces force in a direction that the two processing surfaces part from each other by the supply pressure of the raw materials and applies force for moving the two processing surfaces in a direction that they approach each other so that the reactive site is kept in a very small space.
